# EUROPEAN PATENT SPECIFICATION

(11) **EP 3 164 927 B1**
(45) Date of publication and mention of the grant of the patent: **16.09.2020**
(21) Application number: 15732679.4
(22) Date of filing: 29.06.2015
(51) Int. Cl.: H02J 7/00, H01M 2/34, H02H 11/00

(54) **APPARATUS TO PROVIDE REVERSE POLARITY PROTECTION**
VORRICHTUNG ZUM SCHUTZ GEGEN VERPOLUNG
APPAREIL POUR FOURNIR UNE PROTECTION CONTRE L'INVERSION DE POLARITÉ

(30) Priority: 02.07.2014 EP 14175357
(43) Date of publication of application: 10.05.2017
(73) Proprietor: Aptiv Technologies Limited, St. Michael (BB)
(72) Inventor: VOIGT, Wolfgang, 44867 Bochum (DE); PARRAS, Karl-Heinz, 90459 Nurnberg (DE)
(74) Representative: Manitz Finsterwald Patent- und Rechtsanwaltspartnerschaft mbB
(86) International application number: PCT/EP2015/064728
(87) International publication number: WO 2016/001160

(56) References cited:
- DE-A1- 2 743 636
- DE-A1- 2 842 689
- DE-A1- 3 618 500
- DE-A1- 3 809 576
- DE-A1- 10 022 768
- DE-A1- 19 815 372
- DE-A1-102010 020 294
- DE-A1-102010 020 295
- DE-B3-102010 050 767
- US-A- 5 103 155
- US-A- 5 519 557
- US-A- 5 519 559
- US-A- 5 993 250
- US-A- 6 133 645
- US-A1- 2002 024 784
- US-A1- 2005 116 688
- US-A1- 2006 198 071
- US-A1- 2008 169 787
- "DC POLARITY PROTECTION", ELEKTOR ELECTRONICS, ELEKTOR ELECTRONICS, GB, vol. 5, no. 1, 1 January 1979 (1979-01-01) , page 19, XP002004705, ISSN: 0268-4519

## Description

### Field of the Invention

This disclosure relates to vehicle systems and particularly to an efficient arrangement which provides protection to vehicle systems and components if the vehicle battery or power supply is connected the wrong way round, that is to say protection from reverse polarity.

### Background to the Invention

A car battery may be inadvertently connected to the car wiring the wrong way round, i.e. with the wrong polarity. For example, during a jumpstart procedure, a second, external battery. is connected to the terminals of the main battery, so as to provide a supporting voltage source during the cranking period. Accidental connection to the car wiring in reverse polarity may occur. As electronic devices are becoming important as integral parts of vehicles in greater quantities, there is a need for special provisions in each electronic device to avoid damage to circuitry and components as a result of inadvertent reverse voltage at the power supply lines. Document US 2002/0024784 relates to protective relays protecting circuitry subjected to a battery connected to the circuit with reverse polarity. Document DE 198 15 372 relates to a polarity reversal protection circuit. Document DE 10 2010 020 295 relates to a circuit arrangement, in the case of an incorrect polarity of a motor vehicle battery. Document DE 28 42 689 relates to a self-polarized and self-protected battery charger. Document US 5 103 155 relates to a battery charging system including an electronic polarity sensing, monitoring and alarm circuit and a special polarity reversing relay connected between two pairs of booster cables.

It is common practice, when dealing with low or medium currents, where the power loss and heat generation is low, to provide protection by inserting a serial diode between the power supply and component/circuit. A problem with this however is that these simple diodes cause functional power loss during normal operation of the devices; the power loss equal to the forward voltage drop of the corresponding diode multiplied by the average current flowing.

Power semiconductors (even in power distribution boxes) are being used more and more nowadays as substitutes for mechanical relays and also for fuse function ability. It is common to use power FETs in such devices as they provide a very low ON-Resistance down to 0.5 to 1 mn and are able to carry a huge amount of permanent drain current in the range of 50 A to 100 A. A typical power FET becomes conductive via its intrinsic diode when connected in reverse polarity. This has to be avoided because high current leads to a very high power loss in the reverse diode of the FET. The consequential power dissipation may be 50 or even 100 W and would destroy the· FET by overheating in a very short time leading to a great risk of fire hazard. To overcome this problem a second power FET is known to implemented in series arranged in opposite directions (with source of the first transistor connected to the source of the second one) to each FET switch to avoid reverse current flow. This leads inevitably to doubling of the resulting ON resistance, power loss and material costs.

It is an object of the invention to provide improved a circuitry to protect vehicle systems and component from damage as a result of inadvertent reverse polarity connection. It is a further object to provide protection which reduces power consumption of traditional solutions during normal and protective operation.

It is a further object to provide a central autonomous solution to get rid of the above mentioned problems with reverse battery which avoids additional power losses in the active state and shows a negligible power consumption in inactive or sleep mode.

### Statement of the Invention

The invention is defined by claim 1.

Preferred embodiments are set out in the dependent claims.

### Brief Description of Drawings

The invention will now be described with reference to the following figures of which:
Figure 1 shows a schematic representation of how components and systems of a vehicle are protected in prior art systems.
Figure 2 shows a schematic circuit diagram showing such the use of a relay in known systems.
Figure 3 shows a basic example of the invention
Figure 4 shows the circuitry used in one example.

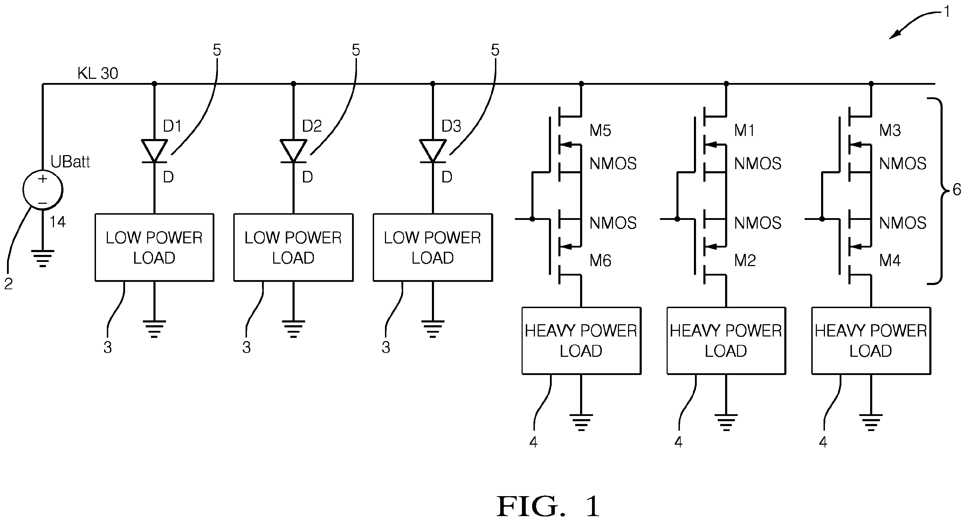

Figure 1 shows a schematic representation of how components and systems of a vehicle are protected in prior art systems. The circuit 1 shows a power supply i.e. battery 2, which may be falsely connected i.e. with reverse polarity. The battery can supply power to one or more low power loads 3 or one or more high power loads 4. To protect the low power loads diodes 5 are used between the power supply and the low power loads (components). To protect the high power loads (components and devices) an additional FET is provided to an existing FET to provide a pair of FETs 6 arranged in series. So second power FET is implemented in series but in arranged in the opposite direction to each other (with source of the first transistor connected to the source of the second one) to avoid reverse current flow. As mentioned this leads inevitably to doubling of the resulting ON resistance, power loss and material costs.

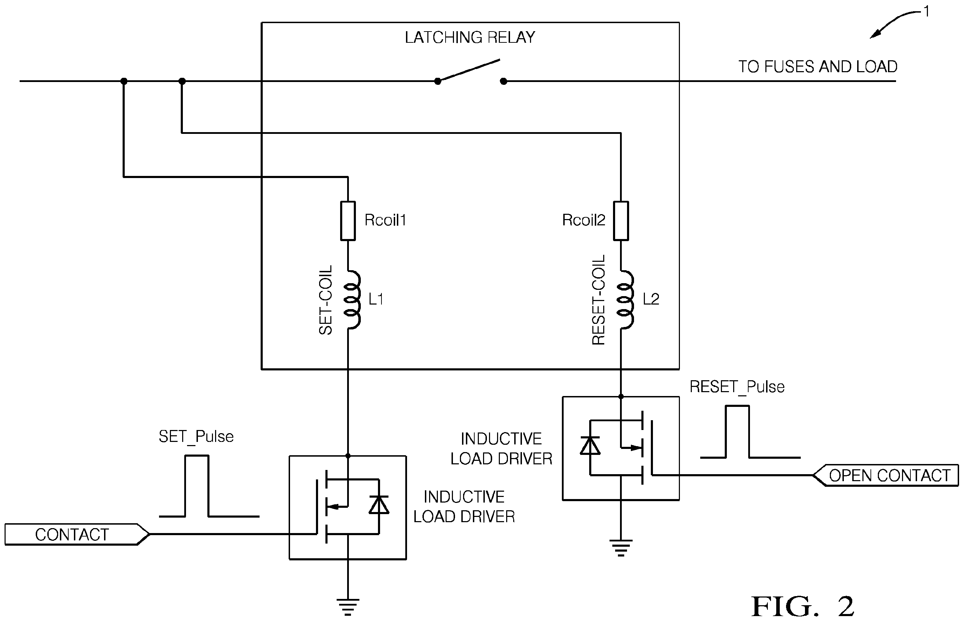

It is known to use latching relays in vehicle systems located between the battery and the fuses and loads of vehicle systems for purposes other than to prevent damage form reverse polarity connection. Figure 2 shows a schematic circuit diagram showing such a system. The relay 7 is operated by a SET coil L1 (in series with coil resistor Rcoil 1) and a RESET coil L2 (in series with resistor Rcoil2). The latching relay is controlled by SET and RESET pulses sent to inductive load drives. These control the currents sent through the coils which in turn open/close the latching relay.

### Detailed Description of the Invention

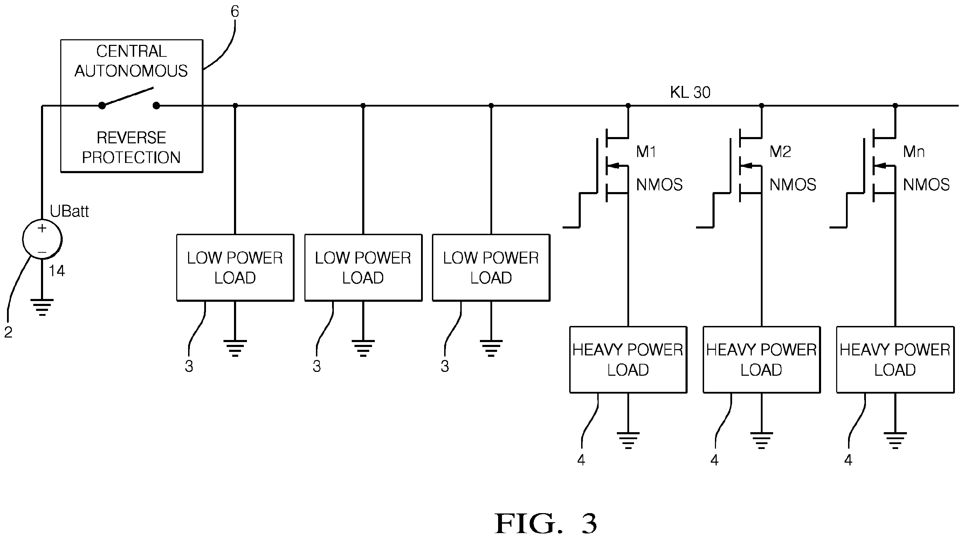

Figure 3 shows a basic example of the invention. In essence a central autonomous reverse protection circuit/system is provided between the battery 2 and the components/loads 3 /4 which obviates the need for the additional diodes with respect to the low loads and the extra FET for the high power loads. In one aspect a latching relay 6 is used to provide reverse polarity protection.

In a preferred embodiment the latching relay present on current vehicle systems is used to provide reverse polarity protection. In one aspect additional latching relay circuitry is used to implement control of the latching relay with respect reverse polarity protection.

Thus in a simple example a latching power relay is thus used as a "protection switch" which is arranged to open in a very short time after voltage reversal to isolate all sensitive electronic circuits from the power supply line. A latching relay will not consume power during steady ON or OFF state. This provides a big advantage in comparison with using protection diodes in the power lines or implementing a second "opposite" FET in electrolytic power switches for high currents.

An appropriate electronic circuit is provided to achieve fast opening of the protection switch in case of voltage reversal and closing of the switch· as soon as the battery voltage is applied with proper polarity again. A very harsh requirement for the monitoring circuit is the low operating voltage for both polarities of 3.4 V maximum.

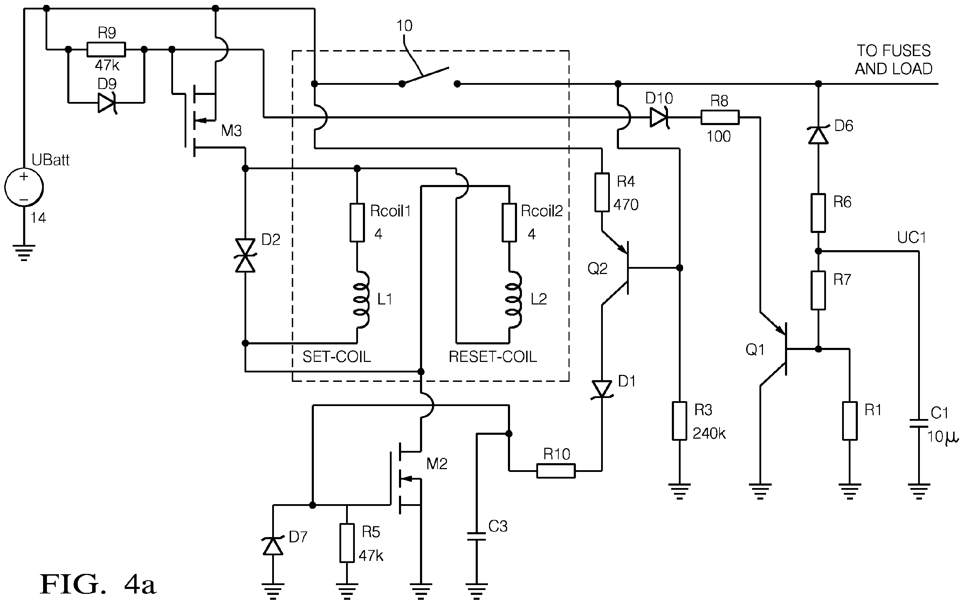

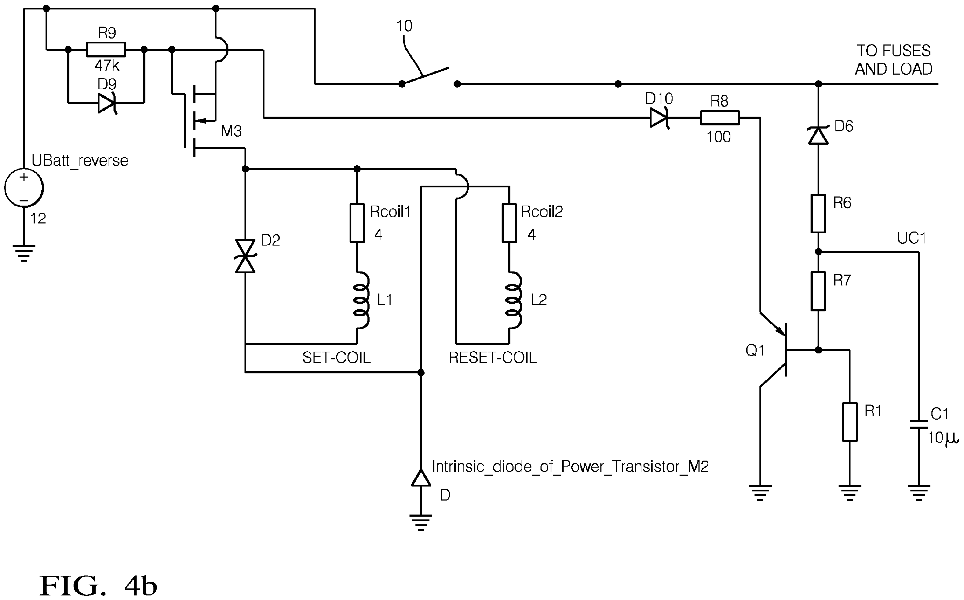

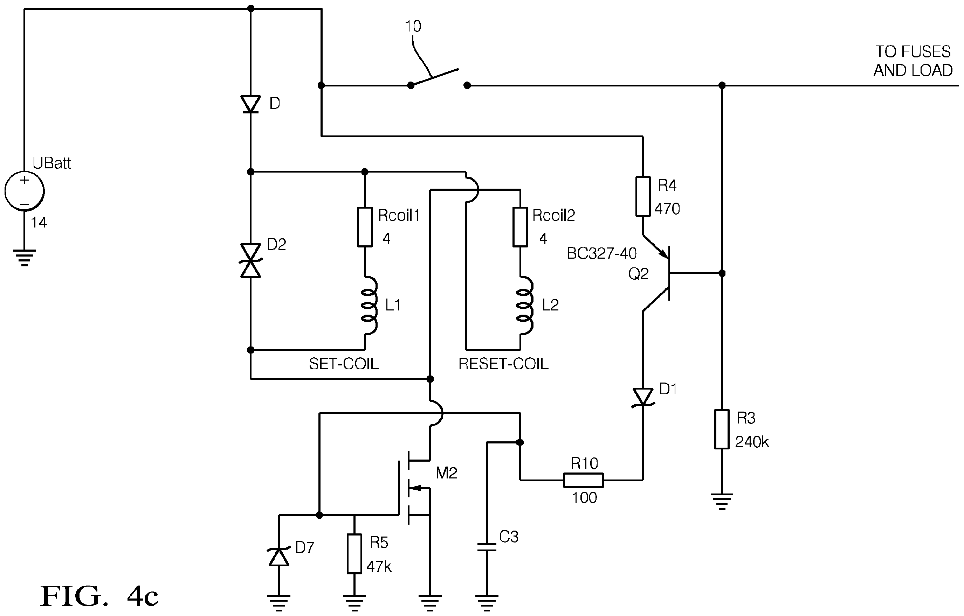

Figures 4a, b, and c show a detailed example of circuitry which uses a relay to provide reverse polarity protection in one example.

Figure 4a shows the overall circuitry which is used in one example. Figures 4b and 4 c show portions of the circuitry of the figure 4a circuit but with selective portions missing for clarity purposes so as to help explain how the individual portion of the circuit operate.

In general the circuitry includes a latching relay 10 which may for example be a Gruner 750. The relay is operated by coils L1 and L2. Although in the figure the relay and the coils L1 and L2 appear separately for clarity purposes they are co-arranged. The coils thus may be regarded as part of the relay and so the relay and coils to operate the relay are shown in dashed lines to indicate they are co-located. The coils are in series with resistors Rcoill and Rcoil2. The battery/power supply 2 which may be reversely connected is shown.

The additional circuitry will now be described together its operation to provide reverse polarity protection. For better understanding, as mentioned, the circuit is divided in two functional parts shown by figures 4b and c respectively. Figure 4b shows the circuitry to provide quick opening of the relay contact in case of reverse polarity and figure 4c shows the circuitry to provide for closing the relay contact after establishing the right polarity again.

### Opening of the Relay Contacts in Case of Reverse Battery Polarity

The circuitry is figure 4b shows the circuitry which is used to open the relay if the power supply is connected the wrong way round. It is assumed that the latching relay contacts have been permanently closed during a normal operating period, either in sleep or in active mode.
As soon as the resulting battery voltage (may be during jump start) is accidentally reversed, a capacitor C1 is loaded quickly by current flow through a Zener diode D6 and resistor R6 arranged in series from a line from the main power supply line to the vehicle components/systems. A line from the capacitor is fed via resistor R7 to the base of a transistor Q1 which is otherwise also connected via Zener diode D10 and resistor R8 (the latter two components arranged in series), and resistor R9 and diode D6 (these being arranged in parallel) to the power supply line. When the base-emitter-voltage of Q1 reaches the base-emitter-tum-on-level, Q1 is switched on rapidly and generates a sufficient gate voltage for a Power FET M3 (supplied via a connection from the power line) by driving the collector current through R8, D10 and R9. The power FET M3 is fed from battery supply line and provides a high current to pass through the relay coils Rcoil1 and Rcoil2. If the reverse battery voltage is very high, the gate voltage of M3 is safely limited by the diode D9 (optional).

When M3 is switched to the ON-state it drives its drain current through the parallel connected coils (Rcoil1 and Rcoil2) of the latching relay and the intrinsic diode of Power FET M2. This very sharp current pulse opens the relay contact momentarily. Typically for a Gruner 750 relay the action time is 10 ms. It is to be noted that the current is arranged to flow in the SET and RESET coil by the circuitry such that they act to provide latching/unlatching force in the same direction during this operation.

To avoid repetitive bouncing of the relay contacts, the coil currents may be extended for some 20 ms to 30 ms by sustaining a sufficient base current for Q1 out of the charge reservoir of capacitor C1 even after opening of the latching contact. This time can be regarded as prolongation time. Suppressor diode D2 preferably functions as a freewheeling diode to absorb the energy of the coils during the time when M3 is switched to the OFF state (preferred).

### Closing the Relay Contacts again after Applying Correct Battery Polarity

It is assumed that the latching relay contacts have been opened during a reverse polarity event. The additional circuitry used to control closing is shown in figure 4c. As soon as the battery voltage is present with the correct polarity a base current is driven through transistor Q2 (which is connected via resistor R4 from a connection to the power supply line) via base resistor R3 (and eventually via additional load resistors in parallel). Q2 is switched into saturation causing a sufficient gate voltage for Power FET M2 by driving the collector current through D1, R10 and R5. FET M2 is provided and connected to one side of each coil and allows high current to pass through the coils. In order to protect the circuitry, if the battery voltage was very high, the gate voltage of M2 is safely limited by a diode D7.
When M2 is switched to into its ON-state, it drives its drain current through the parallel connected coils of the latching relay and the intrinsic diode of Power FET M3. This very "sharp" current pulse closes the relay contacts. This can be achieved with a Gruner 750 relay in 10ms. As soon as the relay contact is closed, base and emitter of Q2 are connected by the closed contact itself and the base current for transistor Q2 stops. Transistor Q2 goes into Off state, and the gate voltage of M2 is falls below the threshold voltage turning M2 into Off state also. Optional suppressor diode D2 functions as a freewheeling diode to absorb the energy of the coils in the moment when M2 is switched to the Off state.

The above example is by way of example only and the skilled person could readily envisage alternative arrangements to provide the requisite functionality.

As mentioned a Gruner 750 relay may be used which is designed for a continuous Current of 100 A at an ambient temperature of 105 °C. In-rush current can be as high as 550 A, short time overload current is defined with an amount of 3.000 A, maximum make/brake current is 1.500 A. Other type of latching relay may be implemented using the same circuit principle and/or design goals. The Gruner 750 provides two coils, one for setting and one for resetting the contact. The standard nominal operating voltage of these coils is 6 to 16 V. As a trigger voltage of 3.4 V or lower is mandatory for the protection switch.
In the example above a relay design such as the Gruner 750 provides both SET and RESET coils and a particular advantage of the circuits described above is to use both coils for forced setting or resetting. Thus this doubles the magnetic flux in the armature. The circuitry as shown provides the polarity of the SET coil voltage to be inverted with respect to that for the REST coil so that both coils work in the same direction. This provision would lead to for example a trigger voltage of 3.0 Volt.

As in some circumstances voltage drops in the trigger circuitry (diode forward voltage drop, saturation 'voltage of transistors) cannot be avoided, a relay modification with lower coil resistances of 4 Ω (Standard 10 Ω) can be provided to compensate for these losses.

In certain examples an important item of the invention is the inherent feedback function concerning the contact position, which leads to a much better operational reliability. If the contact is open ·with normal polarity of the battery voltage, the coil current is provided continuously until the contact is closed totally. If the contact is closed with reversed polarity of the battery, the coil current is provided .continuously at least (plus prolongation time) until the contact is totally open. Using the intrinsic diode of M3 to close the current path when M2 is in ON state (and vice versa) eliminates in a simple way the need for additional diodes.

## Claims

1. An apparatus configured to protect one or more system components (3, 4) from damage due to reverse polarity connection of a power supply (2),
said apparatus comprising a relay (6)
adapted to be located between said power supply (2) and said components (3, 4), and.
said apparatus comprising a first switch means (M3) and a means to detect reverse polarity,
said apparatus being adapted to detect when a
power supply (2) is connected with reverse polarity and to consequently switch the relay (6) to an open state to isolate said power supply (2) from said components (3, 4),
wherein said relay (6)
being a latching relay (10) includes coils (L1, L2) adapted to be
connected to a power supply line
via said first switch means (M3),:
said first switch means (M3) being connected to said means to detect
reverse polarity, adapted to be switched on to drive current through the coils (L1, L2) to open the relay (6) on detection of reverse polarity,
wherein said means to detect reverse polarity includes
capacitor means (C1) adapted to be
connected to said power supply line between the relay (6) and the
components (3, 4) and adapted to be charged as a consequence of reverse polarity to provide a voltage level, which when achieved is adapted to activate said :first switch means (M3),
**characterized in that**
said relay (6) includes a SET coil (L1) and a RESET coil (L2) arranged in parallel and connected to said first switch means (M3) supplied by the power supply line such that when said reverse polarity current is detected, current is driven through the coils (L1, L2) in opposite directions so that said coils (L1, L2) both act in synergy to open the relay (6).

2. An apparatus as claimed in claim 1 adapted to detect when said power supply (2) is connected with correct polarity and means to consequently switch the relay to a closed state if open.

3. An apparatus as claimed in claim 1 or 2 wherein said first switch means (M3) is a power FET and further said apparatus includes a first intermediate switch means (Q1) located between said capacitor (C1) so as to switch on said first switch means (M3) when said voltage level is achieved.

4. An apparatus as claimed in any of claims 1 to 3 including a diode (D2) arranged in parallel with the coils (L1, L2) adapted to absorb coil energy when said first switch means (M3) is switched to an OFF state.

5. An apparatus as claimed in any of claims 1 to 4 where said means to detect whensaid power supply (2) is connected with correct polarity and means to consequently switch the relay (6) to an closed state if open, comprises a second switch means (M2) adapted to be switched on detection of correct polarity, to send current through the relay coilss (L1, L2) in a direction so as to close the relay (6).

6. An apparatus as claimed in claim 5 wherein said SET (L1) and RESET coils (L2) are connected to the second switch means (M2) such that when correct polarity is detected, current is driven through the coils (L1, L2) in opposite directions so that said coils (L1, L2) both act in synergy to close the relay (6).

7. An apparatus as claimed in one of claims 5 to 6 wherein detection means includes a second intermediate switch means (Q2) located between the power supply line and the second switch means (M2) and having connection to the both sides of the power supply line with respect to relay contacts, and adapted to switch on said second switch means (M2) on detection of the correct polarity.

8. An apparatus as claimed in claim 7 wherein said intermediate switch means (Q1, Q2) comprise transistors and/or said :first and second switch means (M3, M2) comprise power transistors/FETs.

## Patentansprüche

1. Vorrichtung, die ausgestaltet ist, um eine oder mehrere Systemkomponenten (3, 4) vor einer Beschädigung aufgrund einer Verbindung mit vertauschter Polarität zu einer Stromversorgung (2) zu schützen,
wobei die Vorrichtung ein Relais (6) umfasst, das zum Anordnen zwischen der Stromversorgung (2) und den Komponenten angepasst ist, und
wobei die Vorrichtung ein erstes Schaltermittel (M3) und ein Mittel zur Erkennung einer vertauschten Polarität umfasst,
wobei die Vorrichtung angepasst ist, um zu erkennen, wenn eine Stromversorgung (2) mit vertauschter Polarität verbunden ist und um infolgedessen das Relais (6) in einen offenen Zustand zu schalten, um die Stromversorgung (2) von den Komponenten (3, 4) zu isolieren,
wobei das Relais (6) ein bistabiles Relais (10) mit Spulen (L1, L2) ist, das angepasst ist, um mit einer Stromversorgungsleitung über das erste Schaltermittel (M3) verbunden zu werden,
wobei das erste Schaltermittel (M3) mit dem Mittel zur Erkennung einer vertauschten Polarität verbunden ist und angepasst ist, um eingeschaltet zu werden, um Strom durch die Spulen (L1, L2) zu treiben, um das Relais (6) bei Erkennung einer vertauschten Polarität zu öffnen,
wobei das Mittel zur Erkennung einer vertauschten Polarität ein Kondensatormittel (C1) beinhaltet, das angepasst ist, um mit der Stromversorgungsleitung zwischen dem Relais (6) und den Komponenten (3, 4) verbunden zu werden, und angepasst ist, um als Folge einer vertauschten Polarität geladen zu werden, um ein Spannungsniveau bereitzustellen, das angepasst ist, um, wenn es erreicht wird, das erste Schaltermittel (M3) zu aktivieren,
**dadurch gekennzeichnet, dass**
das Relais (6) eine SETZEN-Spule (L1) und eine RÜCKSETZEN-Spule (L2) beinhaltet, die parallel angeordnet sind und mit dem von der Stromversorgungsleitung gespeisten ersten Schaltermittel (M3) derart verbunden sind, dass, wenn der Strom mit vertauschter Polarität erkannt wird, Strom durch die Spulen (L1, L2) in entgegengesetzte Richtungen getrieben wird, sodass die beiden Spulen (L1, L2) zusammenwirken, um das Relais (6) zu öffnen.

2. Vorrichtung nach Anspruch 1, die angepasst ist, um zu erkennen, wenn die Stromversorgung (2) mit korrekter Polarität verbunden ist und Mittel aufweist, um das Relais infolgedessen in einen geschlossenen Zustand zu schalten, wenn es offen ist.

3. Vorrichtung nach Anspruch 1 oder 2, wobei das erste Schaltermittel (M3) ein Leistungs-FET ist und die Vorrichtung ferner ein erstes Zwischenschaltermittel (Q1) beinhaltet, das zwischen dem Kondensator (C1) angeordnet ist, um das erste Schaltermittel (M3) einzuschalten, wenn das Spannungsniveau erreicht ist.

4. Vorrichtung nach einem der Ansprüche 1 bis 3, die eine Diode (D2) beinhaltet, die parallel zu den Spulen (L1, L2) angeordnet ist und angepasst ist, um Spulenenergie zu absorbieren, wenn das erste Schaltermittel (M3) in einen AUSGESCHALTET-Zustand geschaltet wird.

5. Vorrichtung nach einem der Ansprüche 1 bis 4, wobei das Mittel zum Erkennen, wenn die Stromversorgung (2) mit korrekter Polarität verbunden ist, und das Mittel, um infolgedessen das Relais (6) in einen geschlossenen Zustand zu schalten, wenn es offen ist, ein zweites Schaltermittel (M2) umfassen, das angepasst ist, um bei Erkennung einer korrekten Polarität geschaltet zu werden, um Strom durch die Relaisspulen (L1, L2) in eine Richtung zu senden, um das Relais (6) zu schließen.

6. Vorrichtung nach Anspruch 5, wobei die SETZEN-Spule (L1) und die RÜCKSETZEN-Spule (L2) mit dem zweiten Schaltermittel (M2) derart verbunden sind, dass, wenn eine korrekte Polarität erkannt wird, Strom durch die Spulen (L1, L2) in entgegengesetzte Richtungen getrieben wird, sodass die beiden Spulen (L1, L2) zusammenwirken, um das Relais (6) zu schließen.

7. Vorrichtung nach einem der Ansprüche 5 bis 6, wobei das Erkennungsmittel ein zweites Zwischenschaltermittel (Q2) beinhaltet, das zwischen der Stromversorgungsleitung und dem zweiten Schaltermittel (M2) angeordnet ist und eine Verbindung mit beiden Seiten der Stromversorgungsleitung mit Bezug auf Relaiskontakte aufweist, und angepasst ist, um das zweite Schaltermittel (M2) bei Erkennung der korrekten Polarität einzuschalten.

8. Vorrichtung nach Anspruch 7, wobei die Zwischenschaltermittel (Q1, Q2) Transistoren umfassen und/oder die ersten und zweiten Schaltermittel (M3, M2) Leistungstransistoren/FETs umfassen.

## Revendications

1. Appareil configuré pour protéger un ou plusieurs composants de système (3, 4) contre les dommages dus à l'inversion de polarité d'une alimentation électrique (2), ledit appareil comprenant un relais (6) adapté à être placé entre ladite alimentation électrique (2) et lesdits composants (3, 4), et
ledit appareil comprenant un premier moyen de commutation (M3) et un moyen de détection de polarité inverse,
ledit appareil étant adapté à détecter quand l'alimentation électrique (2) est connectée avec une polarité inverse et à commuter en conséquence le relais (6) à l'état ouvert afin d'isoler ladite alimentation électrique (2) desdits composants (3, 4),
dans lequel ledit relais (6) est un relais à enclenchement (10) incluant des bobines (L1, L2) adaptées à être connectées à une ligne d'alimentation électrique par l'intermédiaire dudit premier moyen de commutation (M3),
ledit premier moyen de commutation (M3) étant connecté audit moyen de détection de polarité inverse et adapté à être activé pour conduire un courant à travers les bobines (L1, L2) afin d'ouvrir le relais (6) en cas de détection d'une polarité inverse,
dans lequel ledit moyen de détection de polarité inverse inclut un moyen formant condensateur (C1) adapté à être connecté à ladite ligne d'alimentation électrique entre le relais (6) et les composants (3, 4), et adapté à être chargé en conséquence d'une polarité inverse pour fournir un niveau de tension, qui, lorsqu'il est atteint, est adapté à activer ledit premier moyen de commutation (M3),
**caractérisé en ce que**
ledit relais (6) comprend une bobine SET (L1) et une bobine RESET (L2) disposées en parallèle et connectées audit premier moyen de commutation (M3) alimenté par la ligne d'alimentation électrique de telle sorte que lorsque ledit courant de polarité inverse est détecté, le courant est conduit à travers les bobines (L1, L2) dans des sens opposés, en sorte que lesdites bobines (L1, L2) agissent toutes deux en synergie pour ouvrir le relais (6).

2. Appareil selon la revendication 1, adapté à détecter quand ladite alimentation électrique (2) est connectée avec une polarité correcte et un moyen pour commuter en conséquence le relais à l'état fermé s'il est ouvert.

3. Appareil selon la revendication 1 ou 2, dans lequel ledit premier moyen de commutation (M3) est un FET de puissance et ledit appareil inclut en outre un premier moyen de commutation intermédiaire (Q1) situé entre ledit condensateur (C1) afin d'activer ledit premier moyen de commutation (M3) lorsque ledit niveau de tension est atteint.

4. Appareil selon l'une quelconque des revendications 1 à 3, incluant une diode (D2) disposée en parallèle avec les bobines (L1, L2) et adaptée à absorber l'énergie des bobines lorsque ledit premier moyen de commutation (M3) est commuté à l'état OFF (inactif).

5. Appareil selon l'une quelconque des revendications 1 à 4, dans lequel ledit moyen pour détecter quand ladite alimentation électrique (2) est connectée avec une polarité correcte et le moyen pour commuter en conséquence le relais (6) à l'état fermé s'il est ouvert comprennent un deuxième moyen de commutation (M2) adapté à être commuté en cas de détection d'une polarité correcte, pour envoyer du courant à travers les bobines de relais (L1, L2) dans un sens faisant en sorte de fermer le relais (6).

6. Appareil selon la revendication 5, dans lequel lesdites bobines SET (L1) et RESET (L2) sont connectées au deuxième moyen de commutation (M2) de telle sorte que quand une polarité correcte est détectée, du courant est conduit à travers les bobines (L1, L2) dans des sens opposés, de sorte que lesdites bobines (L1, L2) agissent toutes deux en synergie pour fermer le relais (6).

7. Appareil selon l'une des revendications 5 à 6, dans lequel le moyen de détection inclut un deuxième moyen de commutation intermédiaire (Q2) situé entre la ligne d'alimentation électrique et le deuxième moyen de commutation (M2) et ayant une connexion aux deux côtés de la ligne d'alimentation électrique par rapport aux contacts de relais, et adapté à activer ledit deuxième moyen de commutation (M2) en cas de détection de la polarité correcte.

8. Appareil selon la revendication 7, dans lequel lesdits moyens de commutation intermédiaires (Q1, Q2) comprennent des transistors et/ou lesdits premier et deuxième moyens de commutation (M3, M2) comprennent des transistors/FET de puissance.
